# EUROPÄISCHE PATENTSCHRIFT

(11) **EP 2 003 474 B1**
(45) Veröffentlichungstag und Bekanntmachung des Hinweises auf die Patenterteilung: **19.10.2011**
(21) Anmeldenummer: 08016508.7
(22) Anmeldetag: 24.03.2005
(51) Int. Cl.: G02B 5/18, B23K 26/18, C03C 23/00

(54) **Verfahren zur Herstellung eines optischen Bauteils mittels oberflächenstrukturiender Laserbearbeitung**
Method for structuring the surface of an optical component using laser machining
Procédée de structuration d'une surface par usinage laser pour produire un composant optique

(30) Priorität: 27.03.2004 DE 102004015142
(43) Veröffentlichungstag der Anmeldung: 17.12.2008
(62) Teilanmeldung aus: 05733264.5
(73) Patentinhaber: LASER-LABORATORIUM GÖTTINGEN E.V., 37077 Göttingen (DE); Fraunhofer-Gesellschaft zur Förderung der angewandten Forschung e.V., 80686 München (DE)
(72) Erfinder: Ihlemann, Jürgen, 37077 Göttingen (DE); Schulz-Ruthenberg, Malte, 48145 Münster (DE); Heber, Jörg, 99092 Erfurt (DE)
(74) Vertreter: Schneider, Peter Christian

(56) Entgegenhaltungen:
- DE-A1- 3 508 469
- DE-A1- 10 017 614
- SECOND INTERNATIONAL SYMPOSIUM ON LASER PRECISION MICROFABRICATION 16-18 MAY 2001 SINGAPORE, Bd. 4426, 2002, Seiten 437-440, XP002335390 Proceedings of the SPIE - The International Society for Optical Engineering SPIE-Int. Soc. Opt. Eng USA ISSN: 0277-786X
- SCHULZ-RUHTENBERG M ET AL: "Laser patterning of SiOx-layers for the fabrication of UV diffractive phase elements" APPLIED SURFACE SCIENCE, ELSEVIER, AMSTERDAM, NL, Bd. 248, Nr. 1-4, 30. Juli 2005 (2005-07-30), Seiten 190-195, XP004922755 ISSN: 0169-4332

## Beschreibung

Die Erfindung betrifft ein Verfahren zur Herstellung eines optischen Bauteils, mit dem aufgrund seiner durch ein mehrstufiges Profil strukturierten Oberfläche eine optische Funktion für elektromagnetische Strahlung eines AnwendungsWellenlängenbereichs erzielbar ist, wobei die Oberflächenstrukturierung mit Hilfe einer ablatierenden Laserbearbeitung mit einer Laserstrahlung eines Bearbeitungs-Wellenlängenbereichs durchgeführt wird.

Die Mikromaterialbearbeitung mit Lasern wird für verschiedene Anwendungen der Optik, Mechanik, Strömungstechnik und Elektronik eingesetzt. Beispiele dafür sind das Bohren von Mikrolöchern in Leiterplatten oder Tintenstrahlköpfen, das Trimmen von elektrischen Bauteilen, das Abisolieren von Leitungen oder die Herstellung von medizinischen Stents. Bei der Herstellung fein strukturierter optischer Bauteile, beispielsweise solcher Komponenten, die zur Strahlführung und Strahlhomogenisierung für diese Anwendungen benötigt werden, hängt die Präzision der Bearbeitung eng mit dem optischen Absorptionsvermögen bei der entsprechenden Laserwellenlänge zusammen. Nur stark absorbierendes Material kann mit hoher Präzision bearbeitet werden. Insbesondere zur Erzeugung eines bestimmten Profils, bzw. einer bestimmten Struktur, durch Laserablation ist ein hohes Absorptionsvermögen des zu bearbeitenden Materials Voraussetzung. Dabei wird die gewünschte Struktur, beispielsweise eine Maske, durch Abtragen des Materials an den bestrahlten Stellen erzeugt. Andererseits absorbieren optische Gläser und andere optische Materialien (Kristalle) im optischen Spektralbereich, d.h. bei Wellenlängen vom Sichtbaren bis zum Ultravioletten (UV), bestimmungsgemäß nur schwach und können daher mit Lasern, die in diesem Spektralbereich emittieren, nicht mit hoher Präzision bearbeitet werden.

Von besonderer Bedeutung ist der zunehmende Bedarf an funktionellen UV-Optiken, beispielsweise an diffraktiven optischen Elementen (Phasenelemente, Amplitudenelemente) zur Strahlformung und Strahlhomogenisierung von gepulsten UV-Excimerlasern, die für die Mikromaterialbearbeitung prädestiniert sind. Da diese Optiken insbesondere für die typischen Wellenlängen (193nm, 248nm) der Excimerlaser transparent sein sollen, kommen zur Herstellung dieser Optiken nur noch kürzere Wellenlängen (157nm), für die das optische Material, beispielsweise Quarzglas, ausreichend absorbierend ist, in Frage. Die Bearbeitung mit derartig extrem kurzen Wellenlängen ist jedoch außerordentlich schwierig und aufwendig. Zudem bleibt die Anwendung der derart hergestellten Optiken immer auf höhere Anwendungswellenlängen als die Bearbeitungs-Wellenlänge beschränkt. Daher hat sich die Laserablation in der Optikfertigung noch nicht etabliert, obwohl sie insbesondere in der Fertigung miniaturisierter, komplex geformter Optiken, gegenüber klassischen (mechanisches Schleifen und Polieren) oder lithografischen Fertigungstechniken Vorteile hat. Insbesondere bei der Fertigung von Einzelstücken oder Kleinserien ist der Aufwand in Kosten, Zeit und Komplexität des Herstellungsprozesses, durch die vielfältigen Schritte der lithografischen Verfahren (Beschichten, Belichten, Entwickeln, Ätzen) hoch und die Flexibilität in der Formgebung begrenzt. Insbesondere kann die Laserbearbeitung im Gegensatz zu lithografischen Verfahren auch problemlos auf gekrümmte Oberflächen angewendet werden.

Aus der DE 100 17 614 A1 ist ein Verfahren zur Herstellung einer dielektrischen Reflexionsmaske bekannt, bei dem vor der strukturierenden Laserbestrahlung des Bauteils, zwischen einem Substrat und einem Reflexionsmasken-Schichtsystem, bestehend aus alternierenden Schichten mit hohem und niedrigem Brechungsindex, eine die Bearbeitungs-wellenlänge absorbierende Schicht angeordnet wird. Nach der strukturierenden Ablation der Absorptionsschicht können an den bestrahlten Stellen nicht entfernte Reste der Absorptionsschicht zurückbleiben, die die Transparenz der Maske für die Anwendungs-Wellenlänge unerwünscht beeinträchtigen können. Diese Rückstände können dann in einem nachfolgenden Materialumwandlungsschritt in ein transparentes Material umgewandelt werden, um die Maskentransmission zu verbessern.

Das bekannte Verfahren hat zwar den Vorteil, dass bei der Herstellung einer Reflexionsmaske die Beschränkung der Anwendungs-Wellenlänge auf Wellenlängen größer als die Bearbeitungs-Wellenlänge aufgehoben wird, nachteilig wirkt sich jedoch aus, dass eine optische Funktion des Bauteils nur im Zusammenwirken mit der zuvor aufgebrachten Reflexionsmaskenschicht realisiert wird. Die Absorptionsschicht ist hingegen nur bei der Herstellung der Maske wirksam. Das Verfahren ist auch nur zur Rückseitenablation von der Substratseite her geeignet.

Für die Herstellung anderer Bauteile, insbesondere mit mehrstufigen Profilen, wie sie für viele Anwendungen gefordert werden, ist dieses Verfahren eher ungeeignet.

Aufgabe der vorliegenden Erfindung ist es daher, ein Verfahren zur Herstellung eines optischen Bauteils für elektromagnetische Strahlung mittels Laserbearbeitung anzugeben, bei dem die Anwendungs-Wellenlänge der zur Anwendung vorgesehenen elektromagnetischen Strahlung unabhängig von der Bearbeitungs-Wellenlänge der Laserstrahlung wählbar ist, mit dem ein- und mehrstufige Profile an dem Bauteil erzeugbar sind, und das flexibel an verschiedenartigen Bauteilen wahlweise mit vorder- und/oder rückseitiger Bearbeitung anwendbar ist.

Diese Aufgabe wird in Verbindung mit dem Oberbegriff des Anspruches 1 dadurch gelöst, dass zur Erzeugung des mehrstufigen Profils ausgehend von einem für den Bearbeitungs-Wellenlängenbereich transparenten Substratkörper ein Bearbeitungszyklus mehrfach durchlaufen wird, der jeweils aus einem Depositionsschritt und einem Ablationsschritt besteht, wobei
- bei dem Depositionsschritt eine Absorptionsschicht aus einem Oxid-Material, das in einem unvollständig oxidierten Rohzustand die Laserstrahlung des Bearbeitungs-Wellenlängenbereichs in für die ablatierende Laserbearbeitung ausreichendem Maße und die elektromagnetische Strahlung des Anwendungs-Wellenlängenbereiches in für die Erzielung der optischen Funktion zu hohem Maße absorbiert und das in einem vollständig oxidierten Zustand ein geringeres Maß an Absorption für die elektromagnetische Strahlung des Anwendungs-Wellenlängenbereiches aufweist, aufgebracht wird, und
- bei dem Ablationsschritt die aufgebrachte Absorptionsschicht mit Laserlicht der Bearbeitungswellenlänge bestrahlt und an den bestrahlten Stellen wenigstens über einen Teil der Schichtdicke zur Erzeugung einer gestuften Struktur ablatiert wird,
wobei das Oxid-Material im Depositionsschritt eines ersten Bearbeitungszyklus auf einen für den Bearbeitungs-Wellenlängenbereich transparenten Substratkörper (1) und im Depositionsschritt jedes weiteren Bearbeitungszyklus auf die im jeweils vorangegangenen Bearbeitungszyklus erzeugte Struktur aufgebracht wird,
und weiter dadurch gekennzeichnet, dass mindestens einmal ein Materialumwandlungsschritt durch Oxidation durchgeführt wird, bei dem das erzeugte Profil in einen Endzustand, in dem es für die elektromagnetische Strahlung im Anwendungs-Wellenlängenbereich in für die optische Funktion ausreichendem Maße transparent ist, umgewandelt wird.

Durch das erfindungsgemäße Verfahren wird ein Prozess zur Verfügung gestellt, bei dem die Laserbearbeitung (Oberflächenstrukturierung) des Bauteils zur Erzeugung der optischen Funktion, in einem ausreichend absorbierenden Zustand erfolgen kann. Das in der Form fertige Bauteil wird für die Ermöglichung der optischen Funktion in einen transparenten Zustand überführt, wobei ein Material verwendet wird, dessen Absorption / Transmission durch eine Materialumwandlung, die die Form unverändert lässt, über weite Bereiche geändert werden kann.

Dadurch, dass für die Absorptionsschicht ein Material verwendet wird, das in einem Anfangszustand die Wellenlänge des Bearbeitungslasers absorbiert und in einem Endzustand, nach einer Materialumwandlung, im Anwendungs-Wellenlängenbereich transparent ist, kann ein optisches Bauteil für Wellenlängen, die unabhängig von der Bearbeitungs-Wellenlänge sind, hergestellt werden, ohne dass eine Absorptionsschicht aufgebracht werden muss, da das Material im Rohzustand selbst die Absorptionseigenschaft aufweist. Dies wirkt sich besonders kostengünstig und zeitsparend aus. Insbesondere kann die Bearbeitungs-Wellenlänge innerhalb des (späteren) Anwendungswellenlängenbereichs liegen, beispielsweise kann eine Bearbeitungswellenlänge und eine Anwendungswellenlänge jeweils 193nm sein.

Da die geeigneten Ausgangsmaterialien in der Regel ein kontinuierlich abfallendes Absorptionsverhalten von kurzen zu langen Wellenlängen zeigen, und damit eine entsprechend kontinuierlich abfallende Laserbearbeitbarkeit sowie eine kontinuierlich zunehmende Anwendbarkeit als optisches Element aufweisen, sind bei der Herstellung des Bauteils auch Zwischenzustände möglich, die diesen graduellen Absorptions/- Transmissionsänderungen Rechnung tragen. Beispielsweise kann das Ausgangsmaterial für eine erste Wellenlänge im Bearbeitungs-Wellenlängenbereich stark absorbierend und für eine zweite Wellenlänge mäßig absorbierend sein, so dass das Absorptionsvermögen für eine präzise Bearbeitung bei dieser zweiten Wellenlänge nicht ausreichend, andererseits für die optische Anwendung aber noch zu hoch ist. Wird dann die Laserbearbeitung mit der ersten Wellenlänge durchgeführt, so kann das Material nach der Materialumwandlung für die zweite Wellenlänge jetzt hoch transparent sein und für die erste Wellenlänge jetzt mäßig absorbierend sein. D.h., bei der Materialumwandlung wird ein bestimmter Transmissionsgrad (im Idealfall bis hin zur totalen Transparenz) im Bearbeitungs-Wellenlängenbereich je nach Bearbeitungs-Wellenlänge erreicht. In jedem Fall ist für den Ausgangszustand des Bauteils eine ausreichende Absorption der Bearbeitungs-Wellenlänge für eine präzise Bearbeitung und für den Endzustand eine ausreichende Transparenz für die gewünschte(n) Anwendungswellenlänge(n) zur Erfüllung der optischen Funktion maßgebend.

Als Material für die Absorptionsschicht ist SiOₓ besonders für die Anwendung mit UV-Lasern geeignet. Bei dem SiOₓ -Material mit 1 < x < 2 handelt es sich um eine nichtstöchiometrische Siliziumoxid - Verbindung (partiell oxidiertes, aber makroskopisch homogenes Material), die für UV-Strahlung stark absorbierend ist. Als SiO₂ (volloxidiertes Material) ist das Material für UV-Strahlung hingegen hoch transparent und weist zudem eine hohe Zerstörschwelle auf, so dass es für hohe Energiedichten geeignet ist. Die Materialumwandlung ist durch Erhitzen des Materials unter einer oxidierenden Atmosphäre (beispielsweise in Luft) in einer geeigneten Vorrichtung realisierbar. Dabei wird das SiOₓ-Material zu SiO₂ oxidiert. In Versuchsreihen hat sich die thermische Materialumwandlung (Oxidation) eines SiOₓ - Bauteils in Luft für etwa acht bis neun Stunden bei etwa 900°C als besonders effektiv erwiesen. Durch diese Behandlung lässt sich eine besonders hohe Transparenz (intrinsische Transparenz > 90% für 193nm) erzielen. Kürzere Oxidationszeiten und/oder kleinere Temperaturen ergeben schlechtere resultierende Transparenzwerte, mit längeren Oxidationszeiten und/oder höheren Temperaturen lässt sich keine signifikante weitere Verbesserung erzielen. Grundsätzlich ist auch eine photochemische Oxidation durch flächige oder örtlich aufgelöste Laserbestrahlung unterhalb der Ablationsschwelle in einer oxidierenden Atmosphäre mit oder ohne weitere thermische Behandlung möglich. Es ist auch denkbar, gezielt Material lokal aufgelöst umzuwandeln, wodurch sich noch weiterreichende Möglichkeiten der Erzeugung optischer Strukturen (auch unabhängig von einem Materialabtrag) ergeben.

Grundsätzlich kann das Verfahren auch mit anderen Materialien im sichtbaren oder sogar im infraroten Spektralbereich angewendet werden. Als Materialien sind prinzipiell oxidische Materialien wie Metalloxide und Halbleiteroxide verwendbar. Für den UV-Wellenlängenbereich sind neben Siliziumoxid(SiOₓ) Aluminiumoxid, Scandiumoxid, Hafniumoxid und Yttriumoxid besonders geeignet. Für den sichtbaren Spektralbereich sind Tantaloxid und Titanoxid besonders geeignet.

Dadurch, dass ein Bearbeitungszyklus, bestehend aus einer Schichtdeposition und einer strukturerzeugenden Ablation mehrfach durchlaufen wird, kann ein mehrstufiges Bauelement mit mehr als zwei Höhenniveaus hergestellt werden. Dies ist insbesondere bei der Herstellung diffraktiver Phasenelemente (DPE) von Vorteil, da mehrstufige (z.B. 4-, 8-, 16-stufige) DPE eine höhere Beugungseffizienz aufweisen. Da bei entsprechender Einstellung der Laserenergiedichte, der Pulszahl und der Schichtdicke, eine Ablation über die gesamte Tiefe der Ablationsschicht bis auf das Substrat einstellbar ist, kann die jeweilige Grenzfläche zwischen Substrat und Absorptionsschicht als "Sollbruchstelle" verwendet werden. Diese Grenzfläche erleichtert es, ein Substrat in einem definierten Bereich von einer Schicht gleichmäßig und sauber (mit hoher Oberflächengüte) zu befreien. Damit ist, im Vergleich zur Bearbeitung eines Vollkörpers oder im Falle, dass die Absorptionsschicht nur über einen Teil der Schichtdicke abgetragen wird, eine noch höhere Genauigkeit (bzgl. der Stufenhöhe) bei der strukturierenden Laserbearbeitung realisierbar. Bei einer Vorderseitenablation (Bestrahlung direkt auf die Absorptionsschicht) kann auf diese Weise mit n Zyklen ein 2ⁿ-stufiges Element hergestellt werden. Da bei einer Rückseitenablation (Bestrahlung durch das Substrat) entsprechend jeweils das gesamte (bis dahin aufgebaute) Schichtsystem bis hinunter zum Substrat abgetragen wird, kann man hierbei mit n Expositionen ein n+1-stufiges Element generieren. Für komplexere Strukturen sind auch Kombinationen von Vorderseiten- und Rückseitenablation denkbar. Grundsätzlich ist es aber auch denkbar, gezielt Abstufungen innerhalb einer Absorptionsschicht zu erzeugen indem, gesteuert über die Bestrahlungsenergie, an verschiedenen Stellen jeweils nur ein bestimmter Teil der Schichtdicke abgetragen wird. Deposition und Ablation können an verschiedenen Apparaturen durchgeführt werden, der Laserablationsprozess kann aber auch in eine Depositions-Apparatur integriert werden.

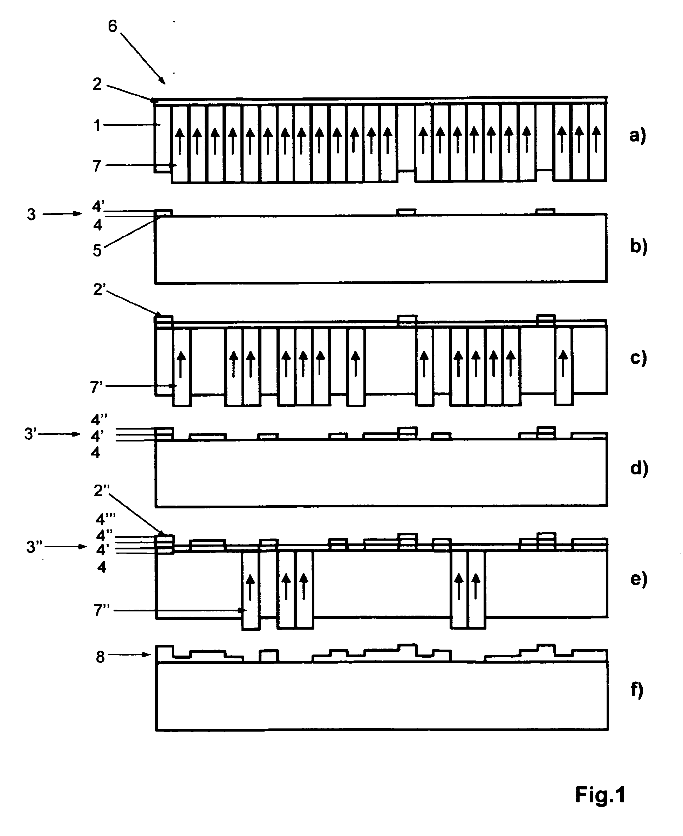

Weitere Einzelheiten der Erfindung ergeben sich aus der nachfolgenden ausführlichen Beschreibung und der beigefügten Zeichnung, in der eine bevorzugte Ausführungsform der Erfindung beispielsweise veranschaulicht ist. Die Figur 1 zeigt ein Schema zur Herstellung eines vierstufigen diffraktiven Phasenelements durch mehrfache Schichtdeposition und Laserablation.

Ein Verfahren zur Herstellung eines optischen Bauteils 6 beruht im Wesentlichen auf einem mehrfachen Durchlaufen eines Bearbeitungszyklus, bestehend aus einem Depositionsschritt einer Absorptionsschicht und einem strukturbildenden Laserablationsschritt sowie auf einer Materialumwandlung, bei der das Bauteil 6 in einen für die Laserstrahlung transparenten Endzustand umgewandelt wird.

Das Verfahren wird am Beispiel eines vierstufigen diffraktiven Phasenelementes (DPE) für UV-Wellenlängen erläutert. Seine Wirkungsweise beruht auf der Beugung von Licht an einem fein strukturierten Oberflächenrelief in einem optischen Material. Durch Beugung und Interferenz einer einfallenden elektromagnetischen Welle, beispielsweise eines Laserstrahls, an dem DPE, kann eine gewünschte Intensitätsverteilung in einer sogenannten Signalebene bewirkt werden. Bei DPEs wird nur die Phase der Lichtwelle moduliert, d.h. sie lassen praktisch vollständig transmittive Elemente zu (Diffraktive Amplitudenelemente (DAE) modulieren dagegen die Amplitude der einfallenden Lichtwelle, d.h. sie sind immer verlustbehaftet). Beispielsweise kann damit das Strahlprofil eines Excimerlasers für eine nachfolgende Anwendung geformt und homogenisiert werden. Das dafür notwendige Oberflächenrelief wird zuvor mittels eines im Prinzip bekannten Rechenalgorithmus, beispielsweise eines computergenerierten Hologramms, berechnet. Die Gesamttiefe der Struktur ist dabei durch die Beziehung D=(q-1)/qxλ/(n-1) gegeben, wobei q die Anzahl der Höhenniveaus, also q-1 die Anzahl der Stufen, λ die Wellenlänge, bei der das DPE seine optische Funktion erfüllen soll und n der Brechungsindex des Materials des DPE in Luft ist. Für ein vierstufiges Element für eine Anwendungs-Wellenlänge von beispielsweise 193nm ergibt sich bei einem Brechungsindex von n=1,561 somit eine Gesamtstrukturtiefe von 258nm bei einer jeweiligen Stufenhöhe von 86nm.

Auf ein Substrat 1, vorteilhaft als ein Quarzkörper ausgebildet, wird durch Aufdampfen (Deposition) eine erste Absorptionsschicht 2 mittels einer geeigneten, prinzipiell bekannten Apparatur, aufgebracht. Über eine (nicht dargestellte) erste (berechnete) Maske wird die Absorptionsschicht 2 anschließend an den bestrahlten Positionen bis auf die Substrathöhe mit einer Laserstrahlung 7 ablatiert (Fig. 1a). Alternativ kann die Bearbeitung auch durch pixelweises Abfahren der Oberfläche des Bauteils 6 über eine entsprechende Ansteuerung des Lasers erfolgen. Die Laserenergie zur Ablation wird der aufgebrachten Schichtdicke angepasst und ist so gewählt, dass die Absorptionsschicht vollständig entfernt wird, das Substrat 1 dabei aber unbeschädigt bleibt. Die Bearbeitung erfolgt substratseitig, d.h. als eine Rückseitenablation. Für die Laserablation wird beispielsweise ein UV-Excimerlaser mit einer Wellenlänge von 193nm, d.h. mit der gleichen Wellenlänge, die für die spätere Funktion des DPE vorgesehen ist, eingesetzt. Die Absorptionsschicht 2 besteht aus einem SiOₓ - Material, das bei 193nm stark absorbierend ist. Das Ergebnis dieses ersten Bearbeitungszyklus ist eine Oberfläche mit einer Struktur 3 mit zwei Höhenniveaus 4, 4', d.h. mit einer Stufe 5 (Fig. 1b). Ein vierstufiges Element hat also vier Höhenniveaus (Levels) und drei Stufen. Ein zweiter Bearbeitungszyklus beginnt mit der Deposition einer zweiten Absorptionsschicht 2', die auf die im ersten Zyklus erzeugte Struktur 3 aufgedampft wird (Fig. 1c). Anschließend erfolgt eine zweite Ablation mit einer strukturierenden Laserstrahlung 7' (über eine zweiten Maske, bzw. pixelweise), wobei die Struktur 3' mit drei Höhenniveaus 4, 4', 4" entsteht (Fig. 1d). In einem dritten Bearbeitungszyklus aus Beschichtung (Deposition) und Ablation entsteht in gleicher Weise über eine Absorptionsschicht 2" mit einer Laserablation 7" die Struktur 3" mit vier Höhenniveaus 4, 4', 4", 4''' (Fig. le). Bei einer abschließenden thermischen Materialumwandlung (Fig. 1f), bei der das Bauteil 6 in einem Ofen über mehrere Stunden in Luft auf mehrere 100°C erhitzt wird, oxidiert das Strukturmaterial SiOₓ zu SiO₂ und wird dadurch für die Laserwellenlänge transparent. Somit entsteht schließlich aus der Struktur 3" ein vierstufiges transparentes Profil 8, das die gewünschte optische Funktion als DPE für die Betriebswellenlänge erfüllt.

Wird statt der mehrfachen Ablation und Deposition einer Absorptionsschicht ein Vollkörper bearbeitet oder nicht die gesamte Schichtdicke abgetragen, so wird die Pulsenergiedichte und die Pulszahl des Lasers ausgenutzt, um definierte Stufentiefen, bzw. ein quasi kontinuierliches Profil, in dem absorbierenden Material zu erzielen, wobei es hier auf eine sehr genaue Einstellung der obigen Parameter sowie des Strahlprofils (Laserstrahlcharakteristik), ggf. mit Hilfe vorgeschalteter optischer Elemente ankommt, um eine hohe Genauigkeit zu erreichen, da die (hilfreiche) "Sollbruchstelle" Substrat - Absorptionsschicht wegfällt.

## Patentansprüche

1. Verfahren zur Herstellung eines optischen Bauteils, mit dem aufgrund seiner durch ein mehrstufiges Profil strukturierten Oberfläche eine optische Funktion für elektromagnetische Strahlung eines Anwendungswellenlängenbereichs erzielbar ist, wobei die Oberflächenstrukturierung mit Hilfe einer ablatierenden Laserbearbeitung mit einer Laserstrahlung eines Bearbeitungs-Wellenlängenbereichs durchgeführt wird,
**dadurch gekennzeichnet,**
**dass** zur Erzeugung des mehrstufigen Profils (8) ein Bearbeitungszyklus mehrfach durchlaufen wird, der jeweils aus einem Depositionsschritt und einem Ablationsschritt besteht, wobei
- bei dem Depositionsschritt eine Absorptionsschicht (2, 2', 2'') aus einem Oxid-Material, das in einem unvollständig oxidierten Rohzustand die Laserstrahlung des Bearbeitungs-Wellenlängenbereichs in für die ablatierende Laserbearbeitung ausreichendem Maße und die elektromagnetische Strahlung des Anwendungs-Wellenlängenbereiches in für die Erzielung der optischen Funktion zu hohem Maße absorbiert und das in einem vollständig oxidierten Zustand ein geringeres Maß an Absorption für die elektromagnetische Strahlung des Anwendungs-Wellenlängenbereiches aufweist, aufgebracht wird, und,
- bei dem Ablationsschritt die aufgebrachte Absorptionsschicht (2, 2', 2") mit Laserlicht der Bearbeitungswellenlänge bestrahlt und an den bestrahlten Stellen wenigstens über einen Teil der Schichtdicke zur Erzeugung einer gestuften Struktur ablatiert wird,
wobei das Oxid-Material im Depositionsschritt eines ersten Bearbeitungszyklus auf einen für den Bearbeitungs-Wellenlängenbereich transparenten Substratkörper (1) und im Depositionsschritt jedes weiteren Bearbeitungszyklus auf die im jeweils vorangegangenen Bearbeitungszyklus erzeugte Struktur aufgebracht wird,
und weiter **dadurch gekennzeichnet, dass** mindestens einmal ein Materialumwandlungsschritt durch Oxidation durchgeführt wird, bei dem das erzeugte Profil (8) in einen Endzustand, in dem es für die elektromagnetische Strahlung (7) im Anwendungs-Wellenlängenbereich in für die optische Funktion ausreichendem Maße transparent ist, umgewandelt wird.

2. Verfahren nach Anspruch 1,
**dadurch gekennzeichnet, dass**
nach jedem Bearbeitungszyklus oder nach ausgewählten einzelnen Bearbeitungszyklen der Materialumwandlungsschritt für die jeweilige Absorptionsschicht (2, 2', 2") durchgeführt wird.

3. Verfahren nach einem der vorangehenden Ansprüche,
**dadurch gekennzeichnet, dass**
die Bearbeitungszyklen vorderseitige Ablationsschritte aufweisen, bei denen die Absorptionsschicht direkt bestrahlt wird und/oder rückseitige Ablationsschritte aufweisen, bei denen die Absorptionsschicht durch den Substratkörper (1) bestrahlt wird.

4. Verfahren nach einem der vorangehenden Ansprüche,
**dadurch gekennzeichnet, dass**
als Rohmaterial eine nichtstöchiometrische SiOₓ-Verbindung mit im Mittel 1 < x < 2 verwendet wird, und dass das SiOₓ - Material durch die Materialumwandlung in einen Endzustand aus SiO₂ umgewandelt wird.

5. Verfahren nach einem der Ansprüche 1 bis 3,
**dadurch gekennzeichnet, dass**
das Rohmaterial aus einer Materialgruppe bestehend aus Aluminiumoxid, Scandiumoxid, Hafniumoxid, Yttriumoxid, Tantaloxid und Titanoxid, ausgewählt wird.

6. Verfahren nach einem der vorangehenden Ansprüche,
**dadurch gekennzeichnet, dass**
die Materialumwandlung ein Oxidationsschritt durch thermische Behandlung des Bauteils in einer Oxidationsatmosphäre ist.

7. Verfahren nach Anspruch 6,
**dadurch gekennzeichnet, dass**
bei der thermischen Oxidation das Bauteil für acht bis neun Stunden einer Temperatur von etwa 900°C ausgesetzt wird.

8. Verfahren nach einem der vorangehenden Ansprüche,
**dadurch gekennzeichnet, dass**
durch Bestrahlung des Bauteils mit einer Laserstrahlung in einer Oxidationsatmosphäre, das bestrahlte Material zumindest in Teilbereichen photochemisch umgewandelt wird.

9. Verfahren nach einem der vorangehenden Ansprüche,
**dadurch gekennzeichnet, dass**
die Bearbeitung des Bauteils durch eine pixelweise Bestrahlung der Bearbeitungsfläche in aufeinanderfolgenden Schritten erfolgt oder dass die Bearbeitung ganzflächig mit Hilfe mindestens eines Abbildungselementes erfolgt.

## Claims

1. A method for manufacturing an optical component, with which an optical function for electromagnetic radiation in an application wavelength range can be achieved due to its surface structured by a multi-stepped profile, the surface structuring being carried out with the aid of laser ablation with laser radiation in a machining wavelength range, **characterized in that** in order to produce the multi-stepped profile (8) a machining cycle is carried out several times, which is composed in each case of a deposition step and an ablation step, where
• in the deposition step an absorption layer (2, 2', 2") of an oxide material is applied which in an incompletely oxidized raw state absorbs the laser radiation in the machining wavelength range to an adequate extent for laser ablation and absorbs the electromagnetic radiation in the application wavelength range to an extent too high to achieve the optical function and which in a completely oxidized state exhibits a lower level of absorption for the electromagnetic radiation of the application wavelength range, and,
• in the ablation step the applied absorption layer (2, 2', 2") is irradiated with laser light in the machining wavelength and is ablated at the irradiated sites, at least over part of the layer thickness, to produce a stepped structure,
where the oxide material is deposited in the deposition step of a first machining cycle on a substrate body (1) that is transparent to the machining wavelength range and is applied in the deposition step of each further machining cycle to the structure produced in the respectively preceding machining cycle,
and further **characterized in that** a material transformation step by oxidation is carried out at least once, in which the profile (8) produced is transformed into a final state in which it is transparent to the electromagnetic radiation (7) in the application wavelength range to an adequate extent for the optical function.

2. A method according to Claim 1, **characterized in that** after each machining cycle or after selected individual machining cycles, the material transformation step is carried out for the respective absorption layer (2, 2', 2").

3. A method according to any of the preceding claims, **characterized in that** the machining cycles comprise front-side ablation steps, in which the absorption layer is directly irradiated and/or comprise rear-side ablation steps, in which the absorption layer is irradiated through the substrate body (1).

4. A method according to any of the preceding claims, **characterized in that** a non-stoichiometric SiOₓ compound at an average 1 < x < 2 is used as the raw material, and that the SiOₓ material is transformed by the material transformation into a final state of SiO₂.

5. A method according to any of Claims 1 through 3, **characterized in that** the raw material is selected from a group of materials composed of aluminum oxide, scandium oxide, hafnium oxide, yttrium oxide, tantalum oxide and titanium oxide.

6. A method according to any of the preceding claims, **characterized in that** the material transformation is an oxidation step through thermal treatment of the component in an oxidizing atmosphere.

7. A method according to Claim 6, **characterized in that** during thermal oxidation the component is exposed for eight to nine hours to a temperature of approximately 900°C.

8. A method according to any of the preceding claims, **characterized in that** through the irradiation of the component with a laser radiation in an oxidizing atmosphere the irradiated material is photochemically transformed, at least in partial regions.

9. A method according to any of the preceding claims, **characterized in that** the machining of the component takes place by irradiating the machined area pixel by pixel in sequential steps or **in that** the machining takes place over the entire area with the aid of at least one imaging element.

## Revendications

1. Méthode de fabrication d'un composant optique, permettant d'obtenir une fonction optique pour un rayonnement électromagnétique dans une plage de longueur d'onde d'application donnée, en raison de sa surface structurée par un profil à plusieurs gradins, la structuration de la surface étant obtenue à l'aide l'une ablation laser avec un rayonnement laser dans une plage de longueur d'onde d'usinage, **caractérisée en ce que** pour réaliser le profil à plusieurs gradins, un cycle d'usinage, composé dans chaque cas d'une étape de pose et d'une étape d'ablation, est effectué plusieurs fois, de sorte que :
• durant l'étape de pose, une couche d'absorption (2, 2', 2") composée d'un matériau oxydé qui, dans un état brut à l'oxydation incomplète, est appliquée pour absorber les rayonnements laser, dans la plage de longueur d'onde d'usinage, dans une limite adaptée pour l'ablation au laser et pour absorber les rayonnements électromagnétiques, dans la plage de longueur d'onde d'application, à un niveau trop élevé pour atteindre la fonction optique et qui, dans un état brut à l'oxydation incomplète, démontre un niveau d'absorption des rayonnements électromagnétiques plus faible pour la plage de longueur d'onde d'application, et,
• durant l'étape d'ablation, la couche d'absorption appliquée (2, 2', 2") est irradiée à l'aide d'une lumière laser dans la longueur d'onde d'usinage et subit une ablation aux endroits irradiés, au moins sur une partie de l'épaisseur de la couche, afin de produire une structure à gradins,
où la matériau oxydé est posé lors de l'étape de pose d'un premier cycle d'usinage sur un corps de substrat (1) transparent à la plage de longueur d'onde d'usinage et qui est appliqué au cours de l'étape de pose de chaque nouveau cycle d'usinage effectué sur la structure produite lors du cycle d'usinage précédent,
et également **caractérisé en ce qu'**une étape de transformation du matériau par oxydation est effectuée au moins une fois, au cours de laquelle le profil (8) produit est transformé jusqu'à atteindre un état final dans lequel il est transparent au rayonnement électromagnétique (7) dans la plage de longueur d'onde d'application dans une limite adaptée pour la fonction optique.

2. Méthode selon la revendication 1, **caractérisée en ce qu'**après chaque cycle d'usinage ou après des cycles d'usinage individuels sélectionnés, l'étape de transformation du matériau est effectuée pour la couche d'absorption correspondante (2, 2', 2").

3. Méthode selon l'une quelconque des revendications précédentes, **caractérisée en que** les cycles d'usinage comprennent des étapes d'ablation de la partie avant au cours desquelles la couche d'absorption est directement irradiée et/ou comprennent des étapes d'ablation de la partie arrière au cours desquelles la couche d'absorption est irradiée à travers le corps de substrat (1).

4. Méthode selon l'une quelconque des revendications précédentes, **caractérisée en ce qu'**un composé de SiOₓ non stoechiométrique, avec une moyenne où 1 < x < 2, est utilisé comme matière première, et en que, lors de la transformation du matériau, le matériau en SiOₓ est transformé pour atteindre son état final de SiO₂.

5. Méthode selon l'une quelconque des revendications 1 à 3, **caractérisée en ce que** la matière première est sélectionnée parmi un groupe de matériaux composés d'oxyde d'aluminium, d'oxyde de scandium, d'oxyde d'hafnium, d'oxyde d'yttrium, d'oxyde de tantale et d'oxyde de titane.

6. Méthode selon l'une quelconque des revendications précédentes, **caractérisée en ce que** la transformation du matériau est une étape d'oxydation au moyen d'un traitement thermique du composant dans une atmosphère oxydante.

7. Méthode selon la revendication 6, **caractérisée en ce que** durant l'oxydation thermique, le composant est exposé pendant huit à neuf heures à une température d'environ 900°C.

8. Méthode selon l'une quelconque des revendications précédentes, **caractérisée en ce que**, lors de l'irradiation du composant par un rayonnement laser dans une atmosphère oxydante, le matériau irradié subit une transformation photochimique, au moins dans certaines régions.

9. Méthode selon l'une quelconque des revendications précédentes, **caractérisée en ce que** l'usinage du composant est effectué par irradiation de la zone usinée, pixel par pixel, au cours d'étapes séquentielles ou **en ce que** l'usinage est effectué sur la zone entière à l'aide d'au moins un élément d'imagerie.
